# EUROPEAN PATENT SPECIFICATION

(11) **EP 4 635 739 B1**
(45) Date of publication and mention of the grant of the patent: **02.12.2026**
(21) Application number: 25185634.0
(22) Date of filing: 24.02.2021
(51) Int. Cl.: D21F 3/06, G01L 5/00, B41F 3/58, B41F 33/00, B41F 33/14, B41F 13/08

(54) **A PRINTING CYLINDER ASSEMBLY**
DRUCKZYLINDERANORDNUNG
ENSEMBLE CYLINDRE D'IMPRESSION

(30) Priority: 28.02.2020 TR 202003061
(43) Date of publication of application: 22.10.2025
(62) Document number(s) of the earlier application(s) in accordance with Art. 76 EPC: 21760541.9 / 4 110 990
(73) Proprietor: Matthews International Corporation, Pittsburgh, Pennsylvania 15212 (US)
(72) Inventor: TANRISEVEN, Ali, Buca/Izmir (TR); OZDEMIR, Serhan, 35430 Urla/Izmir (TR)
(74) Representative: Holzwarth-Rochford, Andreas

(56) References cited:
- JP-A- 2004 243 737
- US-A- 6 112 655
- US-A1- 2002 063 381

## Description

### Field of the Invention

The present invention relates to a printing cylinder assembly for detecting errors during printing.

### Background of the Invention

Printing cylinders are apparatuses which allow a pattern to be applied on a material. The printing cylinder rotates around an axis, and as a result of this rotational movement, receives ink from a reservoir and then transfers the said ink onto the material with the pattern it has. The printing having the desired quality depends on the balance of this rotational movement of the printing cylinder. However, parameters such as changes in ambient temperature, improper mounting, runout or vibration of the printing cylinder may cause the balance to be disrupted. When this balance is disrupted, the print does not have the desired quality.

In the state of the art, when the print does not have the desired quality, the user removes the printing cylinder and sends it to the manufacturer to diagnose the problem. This leads to an increase in production costs as it requires stopping the printing. Furthermore, the process of sending the printing cylinder to the manufacturer is time consuming and costly. Therefore, a printing cylinder assembly is needed in order to determine the cause of errors during printing without sending the printing cylinder to the manufacturer. US6112655, US2002/063381 and JP2004243737 disclose a cylinder with a sensor in the cylinder body.

European patent document no EP0978589**,** an application known in the state of the art, discloses a sensor system which enables to actively reduce the unwanted vibrations in a rotating roller. The sensor system apparatus of the invention comprises at least one sensor provided inside the circular mantle of the roller and/or at least one external sensor provided inside a gap on the surface of the roller mantle.

European patent document no EP2168768**,** an application known in the state of the art, discloses an application of a control device for offset printing machine. The control system has a temperature measuring sensor, and this sensor collects temperature signals determining temperature characteristics on the cylinder surface.

There is no structure for detecting existing and/or developing errors in the printing cylinders known in the state of the art.

### Summary of the Invention

The objective of the present invention is to provide a printing cylinder assembly for detecting existing and/or developing errors during printing.

### Detailed Description of the Invention

The printing cylinder assembly provided in order to achieve the objectives of the present invention is illustrated in the accompanying drawings, in which:

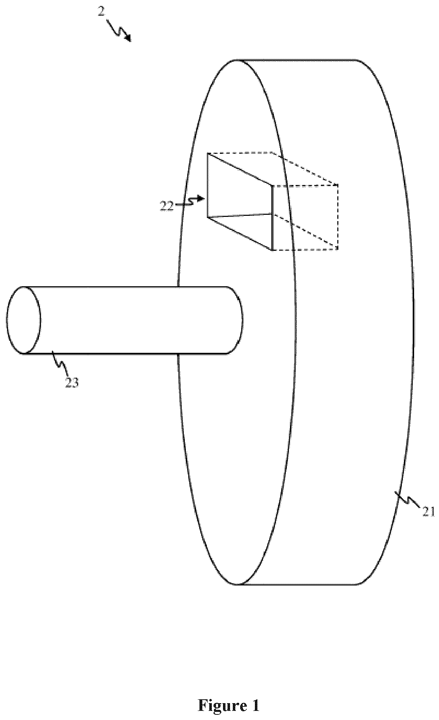

**Figure 1** is the perspective view of the printing cylinder.

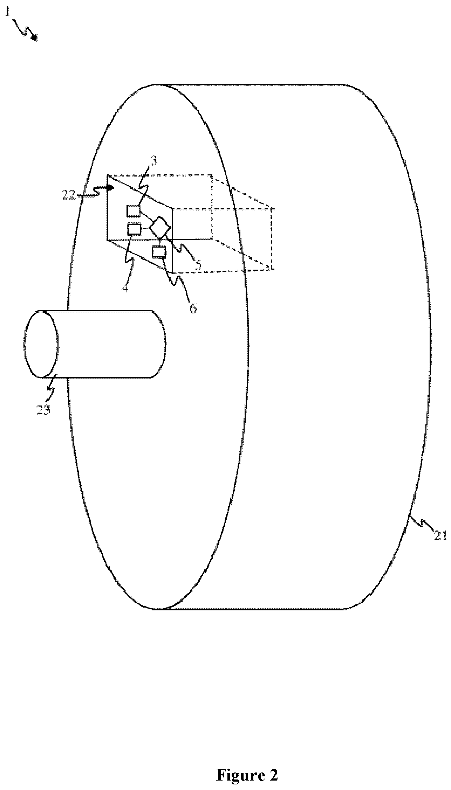

**Figure 2** is the perspective view of the printing cylinder assembly.

The components shown in the figures are each given reference numbers as follows:
**1.** Printing cylinder assembly
**2.** Printing cylinder
   **21.** Body
   **22.** Cavity
   **23.** Shaft
**3.** Sensor
**4.** Communication interface
**5.** Control unit
**6.** Power supply

A cylinder assembly (1) for detecting existing and/or developing errors, the assembly (1) comprising
- at least one cylinder (2) which has at least one cylindrical body (21 ), at least one shaft (23) forming a rotational axis for the body (21), and characterized by
- the cylinder (2) which has a curved surface and two end surfaces, the cylinder (2) having at least one cavity (22) extending into a first end surface of the body (21) towards its interior volume,
- at least one acceleration sensor (3) configured to be placed in the said cavity (22),
- at least one communication interface (4) configured to communicate with an external device, - at least one control unit (5) adapted to receive data from the sensor (3), and process the data to determine a balance problem and and the region of said problem in the cylinder (2),
- at least one power supply (6) which is for supplying the power needed by the sensor (3), the communication interface (4) and/or the control unit (5).

The printing cylinder assembly (1) for detecting existing and/or developing errors during printing comprises at least one printing cylinder (2) which is suitable for printing on a material. The said printing cylinder (2) has at least one cylindrical body (21), and at least one shaft (23) forming a rotational axis for the body (21).

The cylindrical body (21) has at least one cavity (22) extending from its surface towards its interior volume. The said cavity (22) can extend from the bottom, top or the side surface of the body (21) towards the interior volume of the body (21). The said cavity (22) preferably extends from the bottom or top of the body (21) towards the interior volume of the body (21).

The printing cylinder assembly (1) of the present invention comprises at least one sensor (3) which is suitable for being placed in the said cavity (22). The said sensor (3) is a suitable sensor for measuring at least acceleration, speed and/or temperature data. The printing cylinder assembly (1) may comprise a separate sensor (3) for each data desired to be measured, as well as it may also comprise a sensor (3) suitable to measure more than one data at the same time or a combination of these sensors (3).

The printing cylinder assembly (1) of the present invention comprises at least one communication interface (4) suitable for communicating with an external device. Thanks to this communication interface (4), the data received from the sensors (3) can be transferred to an external device directly or by being processed. The said communication interface (4) may be a wired communication interface such as USB, rs-232, etc. and/or it may be a wireless communication interface such as Bluetooth, zigbee, Wi-Fi, RF, etc. It is, of course, obvious that interfaces other than the examples described above can also be used with the present invention.

The printing cylinder assembly (1) of the present invention comprises at least one control unit (5) which is adapted to receive data from the sensor (3) and transfer these data to an external device via the communication interface (4) directly and/or by processing them.

The power needed by the sensor (3), the communication interface (4) and/or the control unit (5) is supplied by at least one power supply (6). The said power supply (6) can be a battery and/or an inductive power supply. In case an inductive power supply is used as the power supply (6), an external magnetic field must be applied to the said inductive power supply. Furthermore, the said inductive power supply can also be used for charging the said battery.

In an embodiment of the invention, the sensor (3) measuring the vibrations of the printing cylinder (2) during operation is an accelerometer. In this embodiment, the sensor (3) that measures the speed of the printing cylinder (2) can be the said accelerometer or a separate speed sensor. The said speed sensor can be any speed sensor, such as a reed switch and magnet pair or an optical pair. The sensor (3) can provide an analog and/or digital data corresponding to the value desired to be measured or a representation of this value. In other words, the data provided by the sensor (3) can be an analog voltage value corresponding to the measured value, the number of pulses provided within a predetermined time or a data transmitted over a data bus. In addition, the sensor (3) may provide the said data wirelessly.

The control unit (5) can transfer the data received from the sensor (3) to an external device via the communication interface (4) upon processing it or in raw form. The control unit (5) can also store the said data in a memory unit, and, when a connection is established with an external device, it can transfer the data contained in the memory unit to the external device collectively or partially. In this embodiment, the printing cylinder assembly (1) of the present invention comprises at least one memory unit suitable for data storage therein. The said external device can be a standard device such as a computer, mobile phone, tablet, as well as it can be a terminal adapted to receive data via the communication interface (4). In addition, the communication interface (4) can also be connected to an external device suitable for connecting to a remote network such as a modem. Therefore, the desired data can be obtained by connecting to the printing cylinder assembly (1) of the present invention from a remote device.

In an embodiment of the present invention, one, several or all of the sensor (3), communication interface (4), control unit (5) and power supply (6) are located inside the cavity (22). The cavity (22) is filled with a polymeric material such as epoxy to ensure that the components therein remain fixed.

The control unit (5) and/or the external device can detect existing and/or developing errors by interpreting the data provided by the sensor (3). For example, if the vibrations during the rotation of the printing cylinder (2) are higher than a predetermined value, this situation can be interpreted as an error. If the said vibration value is higher than a minimum value but lower than a maximum value, this can be interpreted as the printing cylinder (2) develops an error. The data provided by the sensor (3) can also provide information about the service life and conditions of the printing cylinder (2).

In an embodiment of the present invention, the printing cylinder assembly (1) of the present invention comprises at least one clock signal generator in order to provide time data as well as the data provided by the sensor (3).

The error detection method of the present invention comprises the steps of
- detecting whether the printing cylinder (2) has started to rotate or not by means of the sensor (3),
- measuring the time elapsed during operation by means of clock signals in case the printing cylinder (2) has started to rotate,
- receiving acceleration and temperature data from the sensor, comparing the acceleration data with the reference acceleration data, determining whether there is a balance problem as a result of this comparison,
- determining the balance region and intensity in case there is a balance problem, and
- informing the operator that there is a balance problem.

In the step of determining the balance region and its intensity in case there is balance problem, the change of the acceleration data in two axes is evaluated. An application wherein the printing cylinder (2) is divided into regions such as a unit circle can be considered as an example. Let's assume that the acceleration change in the x and y axes is considered in this application. It can be concluded that the imbalance is in the 1^{st} quadrant if the acceleration in the x axis (aₓ) and the acceleration in the y axis (a_{y}) increase together, it is in the 2^{nd} quadrant if a_{y} increases while aₓ decreases, it is in the 3^{rd} quadrant if aₓ and a_{y} decrease together, and it is in the 4^{th} quadrant if a_{y} decreases while aₓ increases.

In the error detection method, it is possible to conduct measurement for a predetermined period of time, and then allow the control unit (5) to sleep for a predetermined period of time. For example, after measuring for 5 seconds, the control unit (5) may be allowed to sleep for 55 seconds. For this, the time measured via the said clock signals is used. The said time periods are only examples. Measurement and sleep periods can be changed as desired.

In the error detection method, after the determination of the region and intensity of the balance, the user can be informed about the region and intensity of the balance, and furthermore the user can be guided about how much weight should be attached to which region in order to eliminate the said balance.

In an embodiment of the invention which can be used in combination with the other embodiments, the printing cylinder (2) comprises at least one mounting hole which is suitable for mounting at least one weight, preferably on the top and/or bottom of its body (21). There are preferably at least eight mounting holes, being at least one in each quadrant in the circular cross section of the cylindrical body (21). However, it is obvious that it can also be more or less.

In an embodiment of the present invention, in order to determine the useful life of the printing cylinder (2) and/or the pattern on the printing cylinder (2) and therefore the printing quantity, the operating parameters of the printing cylinder (2) having the said pattern can be recorded throughout the life of the printing cylinder (2). Therefore, how the printing cylinder (2) behaves at which operating parameters can be recorded, and thus, information about the useful life of the printing cylinder (2) and/or the pattern and their potential of failure during this lifetime is acquired. This in turn enables to determine how efficient the said printing cylinder (2) operates, thereby determining the cost of a printing job efficiently. In addition, thanks to these data, the design of the printing cylinder (2) and/or the pattern, as well as the optimum design and operating conditions of the said printing cylinder (2) and/or the pattern can be determined. The said design is the data such as the hardness of the copper, the engraving diamond angle, the hardness of chrome, the thickness of the chrome, etc., used in the said pattern but is not limited to these.

## Claims

1. A cylinder assembly (1) for detecting existing and/or developing errors, the assembly (1) comprising
- at least one cylinder (2) which has at least one cylindrical body (21 ), at least one shaft (23) forming a rotational axis for the body (21), and **characterized by**
- the cylinder (2) which has a curved surface and two end surfaces, the cylinder (2) having at least one cavity (22) extending into a first end surface of the body (21) towards its interior volume,
- at least one acceleration sensor (3) configured to be placed in the said cavity (22),
- at least one communication interface (4) configured to communicate with an external device,
- at least one control unit (5) adapted to receive data from the sensor (3), and process the data to determine a balance problem and the region of said problem in the cylinder (2),
- at least one power supply (6) which is for supplying the power needed by the sensor (3), the communication interface (4) and/or the control unit (5).

2. The cylinder assembly (1) according to claim 1, **characterized in that** it further comprises a separate sensor (3) for each data desired to be measured and/or a sensor (3) configured to measure more than one data at the same time or a combination of these sensors (3).

3. The cylinder assembly (1) according to claim 1, **characterized by** the power supply (6) which comprises a battery and/or an inductive power supply, wherein optionally the inductive power supply being suitable for charging the said battery.

4. The cylinder assembly (1) according to claim 1, wherein the acceleration sensor (3) is configured for measuring vibrations of the printing cylinder (2) during operation.

5. The cylinder assembly (1) according to claim 2, **characterized in that** the separate sensor (3) is a speed sensor, such as a reed switch and a magnet pair or an optic pair, or a temperature sensor.

6. The cylinder assembly (1) according to one of the preceding claims, **characterized by** the sensor (3) which provides an analog and/or digital data corresponding to the value desired to be measured or a representation of the said value, wherein preferably the sensor (3) is suitable for transferring the said data wirelessly.

7. The cylinder assembly (1) according to one of the preceding claims, **characterized by** the control unit (5) which is suitable for transferring the data it receives from the sensor (3) to an external device via the communication interface (4) by processing and/or in raw form, wherein preferably the cylinder assembly (1) comprises at least one memory unit which is suitable for storing the said data therein, wherein preferably the control unit (5) is suitable for transferring the data in the memory unit to an external device collectively or partially when a connection is established with the external device.

8. The cylinder assembly (1) according to one of the preceding claims, **characterized by** at least one polymeric material which fills the cavity (22) in order to enable the components therein to remain fixed.

9. The cylinder assembly (1) according to claim 7, comprising at least one clock signal generator in order to provide time data.

10. The cylinder assembly (1) according to any one of the preceding claims, **characterized by** the cylinder (2) having at least one mounting hole on top and/or bottom of its body (21) that is suitable for mounting at least one weight, wherein preferably the cylinder (2) has at least eight mounting holes, at least one of which being in each quadrant in the circular cross section of the cylindrical body (21).

11. An error detection method, which is executed by the control unit (5) of a cylinder assembly (1) according to any one of the preceding claims, **characterized by** the steps of
- detecting whether the cylinder (2) has started to rotate or not by means of the sensor (3),
- measuring the time elapsed during operation by means of clock signals in case the cylinder (2) has started to rotate,
- receiving acceleration and temperature data from the sensor (3),
- comparing the acceleration data with reference acceleration data,
- determining whether there is a balance problem as a result of this comparison,
- determining the balance region and intensity in case there is a balance problem, and
- informing a user that there is a balance problem.

12. The error detection method according to claim 11, **characterized by** the step of informing the user about the region and intensity of the balance after the determination of the region and intensity of the balance, and furthermore guiding the user about how much weight should be attached to which region in order to eliminate the said balance.

## Patentansprüche

1. Zylinderanordnung (1) zum Detektieren existierender und/oder sich entwickelnder Fehler, wobei die Anordnung (1) Folgendes umfasst
- mindestens einen Zylinder (2), der mindestens einen zylindrischen Körper (21), mindestens eine Welle (23), die eine Rotationsachse für den Körper (21) bildet, aufweist, und **gekennzeichnet durch**
- den Zylinder (2), der eine gekrümmte Oberfläche und zwei Endoberflächen aufweist, wobei der Zylinder (2) mindestens einen Hohlraum (22) aufweist, der sich in eine erste Endoberfläche des Körpers (21) in Richtung seines Innenvolumens erstreckt,
- mindestens einen Beschleunigungssensor (3), der konfiguriert ist, in dem Hohlraum (22) platziert zu werden,
- mindestens eine Kommunikationsschnittstelle (4), die konfiguriert ist, mit einer externen Vorrichtung zu kommunizieren,
- mindestens eine Steuereinheit (5), die angepasst ist, um Daten von dem Sensor (3) zu empfangen und die Daten zu verarbeiten, um ein Unwuchtproblem und den Bereich des Problems in dem Zylinder (2) zu bestimmen,
- mindestens eine Stromversorgung (6), die zum Zuführen der von dem Sensor (3), der Kommunikationsschnittstelle (4) und/oder der Steuereinheit (5) benötigten Energie dient.

2. Zylinderanordnung (1) nach Anspruch 1, **dadurch gekennzeichnet, dass** sie ferner einen separaten Sensor (3) für jede zu messende Größe und/oder einen Sensor (3), der konfiguriert ist, mehr als eine Größe gleichzeitig zu messen, oder eine Kombination dieser Sensoren (3) umfasst.

3. Zylinderanordnung (1) nach Anspruch 1, **gekennzeichnet durch** die Stromversorgung (6), die eine Batterie und/oder eine induktive Stromversorgung umfasst, wobei optional die induktive Stromversorgung zum Laden der Batterie geeignet ist.

4. Zylinderanordnung (1) nach Anspruch 1, wobei der Beschleunigungssensor (3) zum Messen von Vibrationen des Druckzylinders (2) während des Betriebs konfiguriert ist.

5. Zylinderanordnung (1) nach Anspruch 2, **dadurch gekennzeichnet, dass** der separate Sensor (3) ein Geschwindigkeitssensor, wie etwa ein Reedschalter und ein Magnetpaar oder ein Optikpaar, oder ein Temperatursensor ist.

6. Zylinderanordnung (1) nach einem der vorhergehenden Ansprüche, **gekennzeichnet durch** den Sensor (3), der einen analogen und/oder digitalen Datenwert, der dem Wert entspricht, der gemessen werden soll, oder eine Darstellung des Wertes bereitstellt, wobei vorzugsweise der Sensor (3) dazu geeignet ist, die Daten drahtlos zu übertragen.

7. Zylinderanordnung (1) nach einem der vorhergehenden Ansprüche, **gekennzeichnet durch** die Steuereinheit (5), die dazu geeignet ist, die Daten, die sie von dem Sensor (3) empfängt, durch Verarbeitung und/oder in Rohform über die Kommunikationsschnittstelle (4) an eine externe Vorrichtung zu übertragen, wobei vorzugsweise die Zylinderanordnung (1) mindestens eine Speichereinheit umfasst, die dazu geeignet ist, die Daten darin zu speichern, wobei vorzugsweise die Steuereinheit (5) dazu geeignet ist, die Daten in der Speichereinheit kollektiv oder teilweise an eine externe Vorrichtung zu übertragen, wenn eine Verbindung mit der externen Vorrichtung hergestellt wird.

8. Zylinderanordnung (1) nach einem der vorhergehenden Ansprüche, **gekennzeichnet durch** mindestens ein Polymermaterial, das den Hohlraum (22) füllt, um zu ermöglichen, dass die Komponenten darin fixiert bleiben.

9. Zylinderanordnung (1) nach Anspruch 7, umfassend mindestens einen Taktsignalgenerator, um Zeitdaten bereitzustellen.

10. Zylinderanordnung (1) nach einem der vorhergehenden Ansprüche, **gekennzeichnet durch** den Zylinder (2), der mindestens ein Montageloch auf einer Oberseite und/oder Unterseite seines Körpers (21) aufweist, das zur Montage mindestens eines Gewichts geeignet ist, wobei vorzugsweise der Zylinder (2) mindestens acht Montagelöcher aufweist, von denen sich mindestens eines in jedem Quadranten in dem kreisförmigen Querschnitt des zylindrischen Körpers (21) befindet.

11. Fehlerdetektionsverfahren, das durch die Steuereinheit (5) einer Zylinderanordnung (1) nach einem der vorhergehenden Ansprüche ausgeführt wird, **gekennzeichnet durch** die folgenden Schritte
- Detektieren, ob der Zylinder (2) begonnen hat, zu rotieren oder nicht, mittels des Sensors (3),
- Messen der Zeit, die während des Betriebs verstrichen ist, mittels Taktsignalen, falls der Zylinder (2) begonnen hat, zu rotieren,
- Empfangen von Beschleunigungs- und Temperaturdaten von dem Sensor (3),
- Vergleichen der Beschleunigungsdaten mit Referenzbeschleunigungsdaten,
- Bestimmen, ob es ein Unwuchtproblem gibt, als ein Ergebnis dieses Vergleichs,
- Bestimmen des Unwuchtbereichs und der Unwuchtintensität, falls es ein Unwuchtproblem gibt, und
- Informieren eines Benutzers, dass es ein Unwuchtproblem gibt.

12. Fehlerdetektionsverfahren nach Anspruch 11, **gekennzeichnet durch** den Schritt des Informierens des Benutzers über den Bereich und die Intensität der Unwucht nach der Bestimmung des Bereichs und der Intensität der Unwucht, und weiterhin des Anleitens des Benutzers darüber, wie viel Gewicht in welchem Bereich angebracht werden soll, um die Unwucht zu beseitigen.

## Revendications

1. Ensemble cylindre (1) destiné à la détection d'anomalies existantes et/ou naissantes, l'ensemble (1) comprenant
- au moins un cylindre (2) qui comprend au moins un corps cylindrique (21), au moins un arbre (23) formant un axe de rotation pour le corps (21), et **caractérisé par**
- le cylindre (2) qui présente une surface incurvée et deux surfaces d'extrémité, le cylindre (2) ayant au moins une cavité (22) s'étendant dans une première surface d'extrémité du corps (21) vers son volume intérieur,
- au moins un capteur d'accélération (3) configuré pour être placé dans ladite cavité (22),
- au moins une interface de communication (4) configurée pour communiquer avec un dispositif externe,
- au moins une unité de commande (5) adaptée à recevoir des données en provenance du capteur (3) et traiter les données pour déterminer un problème de déséquilibre et la région dudit problème dans le cylindre (2),
- au moins une alimentation électrique (6) qui est destinée à fournir l'énergie nécessaire au capteur (3), à l'interface de communication (4) et/ou à l'unité de commande (5).

2. Ensemble cylindre (1) selon la revendication 1, **caractérisé en ce qu'**il comprend en outre un capteur séparé (3) pour chaque donnée à mesurer et/ou un capteur (3) configuré pour mesurer plusieurs données simultanément ou une combinaison de ces capteurs (3).

3. Ensemble cylindre (1) selon la revendication 1, **caractérisé par** l'alimentation électrique (6) qui comprend une batterie et/ou une alimentation électrique par induction, dans lequel l'alimentation électrique par induction peut éventuellement être adaptée à la charge de ladite batterie.

4. Ensemble cylindre (1) selon la revendication 1, dans lequel le capteur d'accélération (3) est configuré pour mesurer les vibrations du cylindre d'impression (2) pendant le fonctionnement.

5. Ensemble cylindre (1) selon la revendication 2, **caractérisé en ce que** le capteur séparé (3) est un capteur de vitesse, tel qu'un interrupteur à lames souples et une paire magnétique ou une paire optique, ou un capteur de température.

6. Ensemble cylindre (1) selon l'une des revendications précédentes, **caractérisé par** le capteur (3) qui fournit des données analogiques et/ou numériques correspondant à la valeur à mesurer ou à une représentation de ladite valeur, dans lequel de préférence le capteur (3) est adapté au transfert sans fil desdites données.

7. Ensemble cylindre (1) selon l'une des revendications précédentes, **caractérisé par** l'unité de commande (5) qui est adaptée au transfert des données qu'elle reçoit en provenance du capteur (3) vers un dispositif externe via l'interface de communication (4), par traitement et/ou sous forme brute, dans lequel de préférence l'ensemble cylindre (1) comprend au moins une unité de mémoire qui est adaptée au stockage desdites données en son sein, dans lequel de préférence l'unité de commande (5) est adaptée au transfert des données dans l'unité de mémoire vers un dispositif externe, en totalité ou en partie, lorsqu'une connexion est établie avec le dispositif externe.

8. Ensemble cylindre (1) selon l'une des revendications précédentes, **caractérisé par** au moins un matériau polymère qui remplit la cavité (22) afin de permettre aux composants en son sein de rester fixes.

9. Ensemble cylindre (1) selon la revendication 7, comprenant au moins un générateur de signal d'horloge afin de fournir des données temporelles.

10. Ensemble cylindre (1) selon l'une quelconque des revendications précédentes, **caractérisé par** le cylindre (2) ayant au moins un trou de montage sur le dessus et/ou le dessous de son corps (21) qui est adapté au montage d'au moins un poids, dans lequel de préférence le cylindre (2) a au moins huit trous de montage, dont au moins un se trouve dans chaque quadrant de la section transversale circulaire du corps cylindrique (21).

11. Procédé de détection d'anomalies, qui est exécuté par l'unité de commande (5) d'un ensemble cylindre (1) selon l'une quelconque des revendications précédentes, **caractérisé par** les étapes de
- détection si le cylindre (2) a commencé à tourner ou non au moyen du capteur (3),
- mesure du temps écoulé pendant le fonctionnement au moyen de signaux d'horloge au cas où le cylindre (2) a commencé à tourner,
- réception de données d'accélération et de température en provenance du capteur (3),
- comparaison des données d'accélération avec des données d'accélération de référence,
- détermination s'il existe un problème de déséquilibre à la suite de cette comparaison,
- détermination de la région de déséquilibre et l'intensité en cas de problème de déséquilibre, et
- information d'un utilisateur de l'existence d'un problème de déséquilibre.

12. Procédé de détection d'anomalies, selon la revendication 11, **caractérisée par** l'étape d'information de l'utilisateur de la région et de l'intensité du déséquilibre après la détermination de la région et de l'intensité du déséquilibre, et en outre le guidage de l'utilisateur quant à la quantité de poids à fixer sur quelle région afin de supprimer ledit déséquilibre.
